# FASCICULE DE BREVET EUROPEEN

(11) **EP 3 635 448 B1**
(45) Date de publication et mention de la délivrance du brevet: **23.06.2021**
(21) Numéro de dépôt: 18729860.9
(22) Date de dépôt: 03.05.2018
(51) Int. Cl.: G01V 5/00

(54) **SYSTÈME ET MÉTHODE POUR L'INSPECTION NON INTRUSIVE D'EMBARCATIONS**
SYSTEM UND VERFAHREN ZUR NICHTINTRUSIVEN PRÜFUNG VON GEFÄSSEN
SYSTEM AND METHOD FOR THE NON-INTRUSIVE INSPECTION OF VESSELS

(30) Priorité: 08.05.2017 CH 6122017
(43) Date de publication de la demande: 15.04.2020
(73) Titulaire: Mircea Tudor Scan Tech SA, 2610 Saint-Imier (CH)
(72) Inventeur: TUDOR, Mircea, 2610 Saint Imier (CH)
(74) Mandataire: Dennemeyer & Associates S.A.
(86) Numéro de dépôt international: PCT/CH2018/050014
(87) Numéro de publication internationale: WO 2018/205042

(56) Documents cités:
- WO-A1-2016/036264
- US-B1- 8 855 268
- US-B2- 7 209 540

## Description

La présente invention consiste en un système et une méthode pour l'inspection rapide, complète et non intrusive des embarcations à l'aide des rayonnements pénétrants. L'inspection est réalisée sans l'intervention directe du facteur humain sur l'embarcation inspectée, éliminant ainsi les activités chronophages comme le contrôle physique effectué par les agents de douanes ou de sécurité.

Il est obtenu par la présente invention des images radiographiques de l'embarcation inspectée et des marchandises chargées en embarcation, images sur la base desquelles un opérateur évalue la forme, la quantité et la nature des marchandises et des objets présents dans l'embarcation scannée. Le système obtient des images radiographiques de l'embarcation inspectée sous deux perspectives différentes, l'une substantiellement verticale et l'autre substantiellement horizontale, en obtenant également de cette manière des informations relatives au positionnement précis dans l'espace des objets d'intérêt, ou des zones d'intérêt analysées.

Dans l'application pratique, par l'analyse des images radiographiées obtenues par le système de la présente invention, sont détectées les tentatives de contrebande, les transports illégaux de produits interdits, ou non déclarés (drogues, explosifs, armement, grosses sommes d'argent en espèce, etc.) en utilisant les embarcations comme moyen de transport international.

Actuellement sont connus plusieurs systèmes et méthodes de scanner partiel ou total des embarcations avec des rayonnements pénétrants.

L'un de ces systèmes de contrôle non destructif est décrit dans le brevet "Nautical X-ray Inspection System" (US 6.658.087) utilisant le principe du scanner à rayons X réfléchis (backscatter) et présentant le désavantage de générer une radiographie avec information utile qu'à partir des premiers quelques centimètres de l'embarcation qui est exposée aux détecteurs de rayonnement. En utilisant un tel système, un opérateur ne peut identifier aucun objet ou personne qui ne se trouve pas dans la proximité immédiate des cloisons de l'embarcation, ayant ainsi une utilité très limitée. À la différence de ce système de contrôle non intrusif, le système revendiqué par la présente invention peut identifier les menaces ou les éléments de contrebande trouvés dans tout point de l'embarcation et en plus, le système est capable de faire l'identification spatiale de la menace ou de l'élément de contrebande, l'opérateur étant capable d'appliquer le contrôle intrusif directement dans la zone où est identifié la menace ou l'élément de contrebande.

Un autre brevet d'invention "Vessel Scanning System" (US 7.209.540) décrit un système utilisant le principe du scanner à rayonnement pénétrant, mais pour éviter l'absence de la pénétration générée par le grand volume d'eau qui se trouve autour l'embarcation, le brevet propose l'utilisation d'un système d'éloignement de l'eau dans le sens du scanner, en utilisant des objets élastiques fabriqués en matériaux à basse densité où remplis d'air. Cette méthode présente le désavantage de n'avoir pas la capacité d'éloigner l'eau de manière prévisible, étant donné que les objets qui doivent éloigner l'eau se déformeront de manière aléatoire à la passation d'une embarcation et pour cette raison il va pénétrer beaucoup d'eau dans la zone traversée par le rayonnement pénétrant, eau empêchant la réalisation d'une radiographie précise. La présente invention présente l'avantage d'éliminer les mouvements de tangage en soulevant de manière partielle l'embarcation d'équilibre flottant en utilisant deux supports montés sur les cadres de scanner et équipés de roulettes sur lesquelles se déplace l'embarcation qui va être inspectée. En plus, en utilisant ce système de stabilisation de l'embarcation qui va être inspectée il est diminué au maximum la quantité d'eau entre l'embarcation et les matrices détectrices de rayonnements pénétrants, l'atténuation du rayonnement pénétrant étant non significative dans le processus de scanner.

Un autre système présenté dans une demande de brevet d'invention "Device and method for non-invasive detection of hazardous materials in the aquatic environment" (PCT/PL2015/050021) se propose de détecter la présence de matériaux périlleux dans l'intérieur de l'embarcation en utilisant un générateur de neutrons rapides et la détection du rayonnement spécifique alfa et gamma émis par certains matériaux d'intérêt. Ce système présente le désavantage de ne pas pouvoir être impliqué pour les transports avec matériaux organiques particulièrement parce que les pouls de neutrons rapides peuvent générer des transmutations de la matière qui peuvent être périlleuses pour la vie des hommes et des animaux. En plus, ce système ne résout pas le problème technique proposé par la présente invention, étant donné qu'il ne génère pas une image radiographique des embarcations inspectées.

Le problème technique solutionné par la présente invention est l'inspection rapide, non intrusive et complète des embarcations à l'appui d'un système d'inspection des embarcations à haute capacité d'inspection, réalisant au moins deux images radiographiques complètes de l'embarcation sous différents angles, alors que l'embarcation est tractée par les cadres de scanner d'un dispositif de remorquage faisant partie du système.

Le principe de fonctionnement du système suppose l'irradiation de deux ou plusieurs matrices de détecteurs, de manière typique une située sous la quille de l'embarcation et la deuxième située sur un support substantiellement vertical. Les signaux électriques fournis par les détecteurs sont traités de manière analogique/digitale afin de générer une radiographie, qui va être affichée sur le moniteur d'une station de travail. Le captage et le traitement des signaux fournis d'un grand nombre de détecteurs, généralement quelques milliers, impliquent des blocs électroniques complexes et un réseau de câbles avec un grand nombre de connexions parallèles entre ce bras et les sous-systèmes de génération de l'image radiographiée.

Le système pour l'inspection complète et non intrusive des embarcations conformément à la présente invention, et selon la revendication 1, est constitué d'une structure mécanique support de type bras métallique en console, situé solidairement sur un dock, la structure sur laquelle est installée un premier générateur de rayonnements pénétrants, étant situé au-dessus de la zone par laquelle sont tractées les embarcations qui seront scannées; un deuxième générateur de rayonnements pénétrants situé sur la même structure mécanique support, au bas de celle-ci, un premier cadre de détecteurs de rayonnements situé en immersion, sous le corps de l'embarcation, centré avec le premier générateur de rayonnement pénétrant, avec lequel détermine le cadre de scanner utilisé pour obtenir une image radiographique de l'embarcation inspectée par une projection substantiellement verticale; un deuxième cadre de détecteurs de rayonnements, centré avec le deuxième générateur de rayonnement pénétrant, avec lequel détermine le cadre de scanner utilisé pour obtenir une image radiographique de l'embarcation inspectée par une projection substantiellement horizontale; un système de calcul pour l'acquisition, le traitement et l'affichage des données fournies par les matrices de détecteurs de rayonnement et pour le contrôle du processus de scanner, ainsi qu'un système de traction des embarcations lesquelles seront inspectées par radiographie pendant la passation par les deux cadres de scanner.

Le cadre de scanner qui génère une projection substantiellement verticale (vue de dessus) est composé d'une structure mécanique support formée d'un ou plusieurs segments, étant couplé à un bout du dock du port, ayant monté à l'autre bout un générateur de rayonnement pénétrant qui dans la configuration de scanner est positionné au-dessus de l'embarcation inspectée, de sorte que le faisceau de rayonnement émis par le générateur de rayonnement soit orienté vers l'eau, dans un plan substantiellement vertical - et dans une matrice de détecteurs de rayonnement montée sous l'eau, positionnée sous l'embarcation inspectée, de sorte que les détecteurs soient orientés vers le faisceau de la source de rayonnement et sur lequel est déplacée avec vitesse constante l'embarcation inspectée, par le tractage par le système de tractage des embarcations.

Le cadre de scanner qui génère une projection substantiellement horizontale (vue latérale) est composé d'une autre matrice de détecteurs de rayonnement et laquelle dans le processus de scanner a une position substantiellement verticale, latéralement de l'embarcation inspectée et un générateur de rayonnement placé sur la même structure mécanique support à côté de l'embarcation inspectée, de sorte que son faisceau de rayonnement soit orienté vers la matrice de détecteurs respective.

En vue d'effectuer la radiographie, le dispositif de remorquage des embarcations tire l'embarcation inspectée par les deux cadres de scanner, le mouvement étant synchronisé avec le démarrage des générateurs de rayonnement pénétrant et l'acquisition de données des détecteurs de rayonnement, afin d'obtenir au moins deux images radiographiques de l'embarcation, sous différents angles.

Le système de scanner est équipé aussi d'un sous-système pour surveiller la position de l'embarcation scannée vers les cadres de scanner, contenant au moins un capteur de proximité qui détecte la présence de l'embarcation dans la proximité du premier cadre de scanner, dans le sens de déplacement de l'embarcation et lequel est utilisé pour démarrer automatiquement l'émission de rayonnements au début du scanner et respectivement d'arrêter l'émission de rayonnements à la fin de l'opération de scanner de l'embarcation.

Un ensemble horizontal de détection formé de plusieurs matrices de détecteurs identiques alignés, l'un dans le prolongement de l'autre est situé sous le niveau de l'eau, dans la zone de passation de l'embarcation et il est monté dans un carter parfaitement étanche à l'eau, formé de deux segments articulés au moins, avec un degré de liberté et un système d'actionnement angulaire, permettant d'optimiser l'approche de l'ensemble de segments de détection de la partie immergée de l'embarcation, en modifiant les angles entre les segments de l'ensemble de détection, de sorte qu'il suit aussi fidèlement et dynamiquement le profil de la section du fond de l'embarcation inspectée. Etant connu que l'eau atténue le rayonnement pénétrant, pour obtenir une image radiographique de bonne qualité, l'ensemble de détection est équipé d'un système d'actionnement permettant la variation de la position angulaire entre les segments de l'ensemble, ainsi que la profondeur de naufrage de l'ensemble détecteur dans le but de l'approche du fond de l'embarcation, de sorte qu'entre les matrices de détecteurs et le profil de l'embarcation reste une distance minimale, et implicitement, une quantité minimale d'eau comme élément absorbant, perturbateur de l'image radiographiée. Pour la détermination automatique de l'angle décrit par les segments articulés de l'ensemble détecteur submersible et de la distance de l'ensemble de détection vers le fond profilé de l'embarcation, le système est prévu d'un sous-système de profilage en 3 dimensions du fond de l'embarcation, situé parallèlement à l'ensemble segmenté par les détecteurs, devant celui-ci vers le sens de déplacement de l'embarcation, sous-système générant un modèle informatique tridimensionnel du profil du fond de l'embarcation, selon lequel l'ensemble de détection est ajusté de manière automatique et continue pendant la passation de l'embarcation sur l'ensemble de détection, en modifiant l'angle entre les segments de l'ensemble de détecteurs et de la distance vers le corps de l'embarcation. Le générateur de rayonnement qui forme avec l'ensemble de détecteurs, le cadre de scanner pour une projection substantiellement verticale, est situé sur la structure mécanique support de type console, par une fixation mobile, permettant la modification de la hauteur à laquelle le générateur de rayonnement est situé, afin d'adapter le système de scanner de l'embarcation à diverses hauteurs, et aussi afin de synchroniser sa position avec l'ensemble des détecteurs trouvés sous l'eau, pour maintenir une distance relativement constante, entre les deux éléments.

Un ensemble vertical de détection formé de plusieurs matrices de détecteurs identiques alignés, l'un dans le prolongement de l'autre est situé à côté de la zone de passation de l'embarcation, partiellement immergé dans l'eau et partiellement au-dessus de l'eau, opposé au générateur de rayonnement, avec lequel forme le cadre de scanner pour la projection substantiellement horizontale. L'ensemble vertical de détection est situé sur un dock ou sur une structure flottante et il est prévu avec un système de modification de la position réalisant le déplacement automatique à l'horizontale et à la verticale de celui, selon le tirant d'eau, la largeur et la hauteur de l'embarcation, afin d'optimiser la projection substantiellement horizontale par la compréhension complète de l'embarcation en projection et de diminuer la distance entre l'ensemble de détecteurs vertical et le corps de l'embarcation et implicitement la quantité d'eau qui se trouve entre l'ensemble vertical de détection et l'embarcation, afin de minimiser au maximum possible l'absorption de rayonnement, afin d'optimiser la qualité des images radiographiées. Le générateur de rayonnement qui forme avec l'ensemble de détection le cadre de scanner pour la projection substantiellement horizontale, est situé sur la structure mécanique support de type console, par une fixation mobile permettant la modification de la position à l'horizontale et aussi à la verticale, afin de synchroniser sa position avec l'ensemble vertical de détection trouvé sur le côté opposé de l'embarcation, encadrée ainsi entre les deux générateurs de rayonnements et les deux ensembles de détecteurs, pour maintenir une distance relativement constante, entre les détecteurs et le générateur de rayonnement.

La méthode de contrôle non intrusif, qui peut être utilisé au moyen du système selon l'invention, éloigne les désavantages des systèmes antérieurs par le fait qu'un dispositif de remorquage est couplé à une embarcation qui va être inspectée, étant tractée par deux cadres de scanner, synchronisé avec le démarrage des deux générateurs de rayonnements des cadres de scanner, et respectivement avec la transmission des signaux des matrices de détecteurs, vers le sous-système pour l'acquisition, le traitement, l'engendrement et l'affichage des images radiographiées.

En vue de scanner, l'embarcation est tractée par les deux cadres de scanner avec une vitesse constante, dont valeur est choisie selon le type de l'embarcation et la charge déclarée, la vitesse étant mesurée par un système de mesure de la vitesse, situé sur le dispositif de remorquage. Le sous-système de surveillance de la position de l'embarcation scannée vers les cadres de scanner contient au moins un capteur de proximité qui détecte la présence de l'embarcation dans la proximité du premier cadre de scanner dans le sens de déplacement de l'embarcation et détermine le démarrage des générateurs de rayonnement.

L'arrêt du scanner est réalisé automatiquement dans le cas suivants: au cas où l'embarcation scannée a passé entièrement des deux cadres de scanner, dans la pénétration d'intrus dans le dock de scanner, au déclanchement d'un capteur qui transmet un signal quand l'embarcation ne suit pas la trajectoire de déplacement préétablie, ou quand l'embarcation s'approche de manière périlleuse de tout élément composant du système de scanner, à la détection de l'augmentation ou la diminution périlleuse de la vitesse de déplacement. L'arrêt du processus de scanner peut être commandé aussi manuellement, par l'opérateur, à tout moment du processus de scanner. Pendant la passation par les cadres de scanner, les images résultantes après le scanner de l'embarcation inspectée sont affichées sur le moniteur de l'opérateur, de manière concomitante, proportionnellement et de manière synchronisée avec le déplacement de l'embarcation.

Par l'application de l'invention il est obtenu les avantages suivants:
- L'inspection d'un grand nombre d'embarcations dans un temps réduit (jusqu'à 30 par heure);
- L'inspection complète de l'embarcation, y compris la zone qui se trouve sous le niveau de l'eau, et aussi les compartiments et les cavités constructives de l'embarcation, étant connu que pour des raisons de sécurité et de flottabilité, les embarcations ont une série de cavités théoriquement fermées de manière étanche lesquelles, n'étant pas accessibles pour être inspectées, et qui peuvent être utilisées pour cacher les marchandises de contrebande;
- Obtenir une image complète de l'embarcation scannée par la visualisation de l'image radiographiée sous deux perspectives différentes, vue de dessus et vue latérale, grâce aux deux générateurs de rayonnement pénétrant situés au-dessus et à côté de l'embarcation et des deux ensembles de détecteurs placés de manière opposée, de l'autre côté de l'embarcation;
- Eviter les cas défavorables d'obtenir des radiographies non conclusives, générées par des positions défavorables des éléments suivis pour être découverts, en générant simultanément deux vues sous différentes perspectives, dont une seule peut être défavorable;
- Eliminer le risque d'irradiation professionnelle des opérateurs et aussi le risque d'irradiation accidentelle des intrus éventuels dans le dock de scanner;
- Utiliser personnel opérateur limité à une seule personne par équipe
- Mobilité, flexibilité et manœuvrabilité du système;
- Haut degré d'automatisation;
- Productivité augmentée, grand nombre d'embarcations inspectées par l'unité de temps, par l'automatisation des processus et la diminution des temps morts grâce à la gestion informatisée des processus;
Il est donné ci-après un exemple de réalisation de l'invention en relation avec les figures de 1 à 3 représentant:

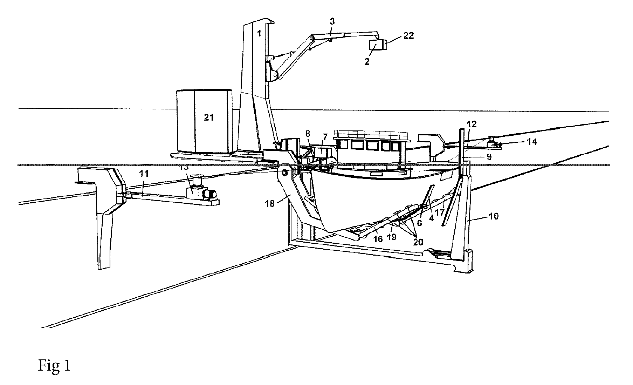

- Figure 1: vue en perspective du système pour l'inspection non intrusive

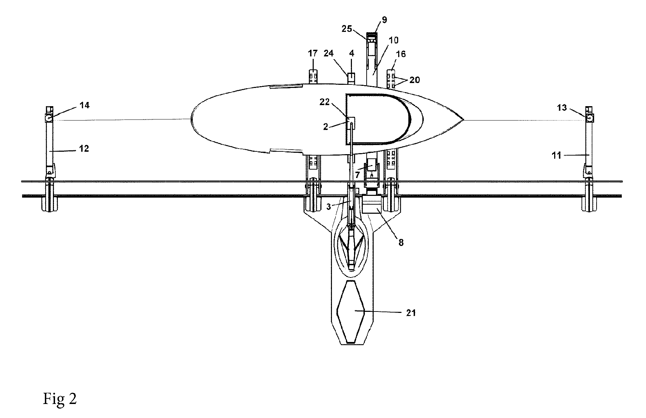

- Figure 2: vue de dessus du système pour l'inspection non intrusive;

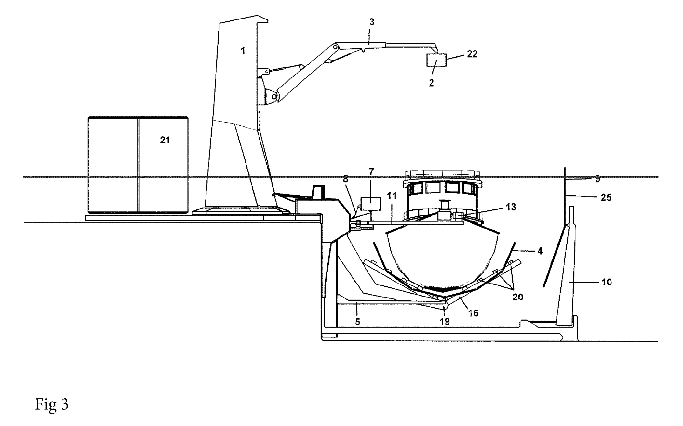

- Figure 3: vue d'avant du système pour l'inspection non intrusive

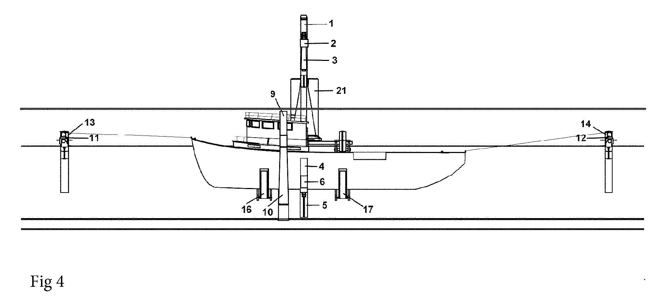

- Figure 4: vue du côté du système pour l'inspection non intrusive

Dans une variante de mise en œuvre, le système pour l'inspection non intrusive par le scanner de l'embarcation, conformément à l'invention, est composé d'une structure mécanique support **1** de type console placée sur un dock, structure sur laquelle il est installé un premier générateur **2** de rayonnements pénétrants étant fixé sur un bras support **3** multi-articulé au-dessus de la zone par laquelle passent des embarcations, bras support **3** multi-articulé assurant la modification de la position du générateur **2** à la fois verticalement et horizontalement, de sorte qu'il forme avec l'ensemble de détection **4** multi-articulé, placé sous le niveau de l'eau et fixé sur un bras **5** multi-articulé fixé solidairement sur la structure de résistance du dock et assurant la modification de la position de l'ensemble de détection **4** multi-articulé, à la fois verticalement et horizontalement, de sorte qu'il forme un premier cadre de scanner pour obtenir une image radiographique de l'embarcation inspectée par une projection substantiellement verticale. L'ensemble de détection **4** multi-articulé est composé par six segments au moins actionnés par un système d'actionnement **6** lequel modifie la forme géométrique de l'ensemble de détection **4** multi-articulé de sorte qu'il suive le profil longitudinal et le profil de section du corps immergé de l'embarcation qui va être inspectée, afin de minimiser la distance et implicitement la quantité d'eau entre l'ensemble de détection et le corps de l'embarcation inspectée. Fixé sur la même structure mécanique support **1** de type console, au-delà de celle-ci, est prévu un deuxième générateur **7** de rayonnements pénétrants, fixé sur un support **8,** assurant la modification de la position du générateur **7,** à la fois verticalement et horizontalement, de sorte qu'il forme avec l'ensemble de détection **9** articulé, placé sur un bras **10,** assurant la modification de la position de l'ensemble de détection **9** articulé, à la fois verticalement et horizontalement, de sorte qu'il forme un deuxième cadre de scanner utilisé pour obtenir une image radiographique de l'embarcation inspectée, par une projection substantiellement horizontale. Pour réaliser le processus de scanner il est prévu un sous-système de traction **T** des embarcations, constitué par deux supports **11** et **12** fixés sur le dock d'un côté et de l'autre par deux cadres de scanner, à la distance de deux longueurs au moins de l'embarcation du type de celles qui doivent être inspectées. Le support **11** est prévu avec treuil **13** et le support **12** est prévu avec le treuil **14. Le** Treuil **13** se connecte à un côté de l'embarcation inspectée, et le treuil **14** se connecte au côté opposé de l'embarcation inspectée pour assurer le tractage par les deux cadres de scanner dans tous les deux sens. L'utilisation des deux treuils opposés assure la stabilité de la vitesse de déplacement, la garde d'une trajectoire rectiligne axiale parallèle au dock et l'obtention d'images radiographiées avec distorsions géométriques minimales.

Pour assurer la clarté de l'image, le système peut être équipé d'un sous-système de stabilisation **15** de l'embarcation vers les deux cadres de scanner, consistant en deux supports **16** et **17** en forme de la lettre "V", placés sous le niveau de l'eau sur deux bras articulés **18** et **19,** bras permettant la variation de la position des supports **16** et **17** en plan vertical, de sorte que ceux-ci enlèvent partiellement l'embarcation de l'équilibre flottant, suffisant pour éliminer les mouvements de tangage induis par les flots, lesquels peuvent être présents dans la zone de scanner. Pour permettre le déplacement de l'embarcation à force réduite sur les supports **16** et **17,** ceux sont équipés de roulettes **20.**

Apres la connexion d'une embarcation au système de traction **T**, on peut réaliser la procédure de scanner en initiant la commande de l'interface de commandes d'un centre de commande **21**, moment où le treuil **13**, étant connecté avec la proue de l'embarcation commence le remorquage par les cadres de scanner, le premier cadre étant délimité par l'ensemble de détection **4** multi-articulé placé sous le niveau de l'eau et le générateur **2** de rayonnements pénétrants, soutenu sur le bras support **3** multi-articulé, trouvé sur le support **1** de type console, et le deuxième cadre de scanner étant délimité par l'ensemble de détection **9** articulé, monté sur le bras **10** et par le générateur **7** de rayonnement pénétrant. Le système est équipé également d'un sous-système de surveillance de la position de l'embarcation scannée, contenant au moins un capteur de proximité **22**, lequel détecte la présence de l'embarcation dans la proximité des cadres de scanner et lequel est utilisé pour démarrer automatiquement l'émission de rayonnement au début du scanner et respectivement pour arrêter l'émission de rayonnement à la fin du scanner de l'embarcation.

Afin de réaliser une image radiographique complexe, le système est équipé d'un sous-système **23** pour l'acquisition, le traitement et l'affichage des données, en utilisant des données fournies par les matrices de détecteurs **24** placées dans l'ensemble de détection **4** multi-articulé et par les matrices de détecteurs **25** placées dans l'ensemble de détection **9** articulé, matrices réceptionnant le rayonnement généré par les générateurs **2** et **7**, rayonnement qui a traversé l'embarcation inspectée; Le sous-système réalise le contrôle du processus de scanner par le contrôle du tractage de l'embarcation, le contrôle de la vitesse de tractage, et aussi le démarrage et l'arrêt des générateurs de rayonnement ionisante.

Le scanner peut être arrêté automatiquement quand l'embarcation inspectée a passé entièrement des deux cadres de scanner, quand s'approche périlleusement de tout composant du système de scanner, en cas de pénétration d'intrus dans le dock de scanner à la détection de la croissance ou de la diminution périlleuse de la vitesse de déplacement, pendant cette phase les images résultantes après le scanner de l'embarcation sont affichées sur le moniteur de l'opérateur, dans le même temps un fichier real du processus de scanner étant créé et archivé, et à la fin de la phase de scanner, sont arrêtés automatiquement les générateurs de rayonnement **2** et **7**, la protection périmétrique du dock de scanner est automatiquement désactivée, les treuils **13** et **14** d'embarcation sont détachés, après quoi elle peut quitter la zone, et le cycle de scanner peut être repris.

## Revendications

1. **Système d'inspection non intrusive des embarcations** composé:
**a. d'une structure mécanique support** (1) **de type console,** située sur un dock, structure sur laquelle sont installés les cadres de scanner
**b. d'un centre de commande** (21) lequel sera positionné à l'extérieur du dock de scanner;
**c. d'un premier cadre de scanner** utilisé pour obtenir une image radiographique de l'embarcation inspectée par une projection substantiellement verticale, vue de dessus, composé:
**i.** d'un bras support (3) multi-articulé, composé de plusieurs segments, ayant monté, à l'extrémité libre, un premier générateur (2) de rayonnements pénétrants; le bras est positionné au-dessus de la zone par laquelle sont tractées les embarcations inspectées, de sorte que le faisceau de rayonnement émis par le générateur de rayonnement pénétrant (2) soit orienté vers l'eau, dans un plan substantiellement vertical;
**ii.** d'un ensemble de détection (4) multi-articulé, monté sous le niveau de l'eau, prévu d'une matrice de détecteurs (24), alignée avec le faisceau du générateur (2) de rayonnements pénétrants et fixée sur un bras (5) multi-articulé positionné sous l'embarcation inspectée sur laquelle est tractée l'embarcation inspectée;
**d. d'un deuxième cadre de scanner** utilisé pour obtenir une image radiographique de l'embarcation inspectée, par une projection substantiellement horizontale, vue latérale, composé:
**i.** d'un ensemble de détection (9) articulé, situé sur un bras (10), ensemble de détection dans la section duquel est montée une matrice de détecteurs (25) et lequel dans le processus de scanner a une position substantiellement verticale, sous un angle variable, à côté de l'embarcation scannée;
**ii.** d'un deuxième générateur (7) de rayonnements pénétrants, placé à côté de l'embarcation inspectée, sur le côté opposé de l'ensemble de détection (9) articulé, de sorte que son faisceau de rayonnement soit orienté vers un ensemble de détection (9) articulé et expose au rayonnement la matrice de détecteurs (25), alignée avec le faisceau de rayonnement;
**e. d'un sous-système** (23) **pour l'acquisition, le traitement et l'affichage des données** fournies par les détecteurs de rayonnement et pour le contrôle du processus de scanner, **caractérisé par le fait que** le sous-système de traction des embarcations **T** tracte l'embarcation inspectée par les deux cadres de scanner, le mouvement étant synchronisé avec le démarrage des générateurs (2 et 7) de rayonnements pénétrants et l'acquisition de données des matrices détectrices (24 et 25), afin d'obtenir au moins deux images radiographiques de l'embarcation, selon des perspectives différentes.
**f. d'un sous-système de stabilisation** (15) **de l'embarcation** pour les deux centres de scanner, enlevant partiellement l'embarcation de l'équilibre flottant, de manière suffisante pour éliminer les mouvements de tangage provoqués par les flots qui peuvent être présents dans la zone de scanner.

2. Système d'inspection non intrusive des embarcations conformément à la revendication **1,** dans lequel le bras support (3) multi-articulé assure la modification de la position du générateur (2) à la fois verticalement et horizontalement, de sorte qu'il forme avec l'ensemble de détection (4) multi-articulé, un premier cadre de scanner pour obtenir une image radiographique de l'embarcation inspectée par une projection substantiellement verticale.

3. Système d'inspection non intrusive des embarcations conformément à la revendication **1**, dans lequel le bras (5) multi-articulé assure la modification de la position de l'ensemble de détection (4) multi-articulé à la fois verticalement et horizontalement, de sorte qu'il forme avec le générateur (2) de rayonnements pénétrants, un premier cadre de scanner pour obtenir une image radiographique de l'embarcations inspectée par une projection substantiellement verticale.

4. Système d'inspection non intrusive des embarcations conformément à la revendication 1, dans lequel l'ensemble de détection (4) multi-articulé, est constitué par au moins six segments connectés par des articulations avec un degré de liberté, permettant un mouvement de rotation réalisé par un système d'actionnement (6), de sorte qu'il permet à l'ensemble de détection (4) multi-articulé de reprendre de manière dynamique la forme du profil longitudinal et du profil en section du corps immergé de l'embarcation qui va être inspectée.

5. Système d'inspection non intrusive des embarcations conformément à la revendication **1**, dans lequel le support (8) assure la modification de la position du générateur (7) de rayonnements pénétrants à la fois verticalement et horizontalement, de sorte qu'il forme avec l'ensemble de détection (9) articulé, un deuxième cadre de scanner utilisé pour obtenir une image radiographique de l'embarcation inspectée, par une projection substantiellement horizontale.

6. Système d'inspection non intrusive des embarcations conformément à la revendication **1**, dans lequel le bras (10) assure la modification de la position de l'ensemble de détection (9) articulé à la fois verticalement et horizontalement, de sorte qu'il forme avec le générateur (7) de rayonnements pénétrants, un deuxième cadre de scanner utilisé pour obtenir une image radiographique de l'embarcation inspectée, par une projection substantiellement horizontale.

7. Système d'inspection non intrusive des embarcations conformément à la revendication **1**, dans lequel l'ensemble de détection (9) articulé, est constitué de deux segments connectés par une articulation avec un degré de liberté, permettant un mouvement de rotation du segment inférieur, de sorte qu'il diminue la distance entre la matrice de détecteurs (25) et la quille de l'embarcation qui sera inspectée.

## Patentansprüche

1. **System zur nichtintrusiven Prüfung von Gefäßen** bestehend:
**a. aus einer mechanischen Tragstruktur** (1) **vom Konsolentyp,** die auf einem Dock angeordnet ist, und auf der die Scannerrahmen installiert sind
**b. aus einem Steuerzentrum** (21), das außerhalb des Scannerdocks positioniert sein wird;
**c. aus einem ersten Scannerrahmen, der** verwendet wird, um ein Röntgenbild des geprüften Gefäßes durch eine im Wesentlichen vertikale Projektion, gesehen von oben, zu erhalten, bestehend:
**i.** aus einem mehrgelenkigen Tragarm (3), der aus mehreren Segmenten besteht, wobei am freien Ende ein erster Generator (2) für durchdringende Strahlung angebracht ist; der Arm über der Zone positioniert ist, über die die geprüften Gefäße gezogen werden, sodass der vom Generator (2) für durchdringende Strahlung emittierte Strahlungsstrahl in einer im Wesentlichen vertikalen Ebene auf das Wasser gerichtet ist;
**ii.** aus einer mehrgelenkigen Detektionsanordnung (4), die unterhalb des Wasserspiegels angebracht und mit einer Matrix von Detektoren (24) versehen ist, die mit dem Strahl des Generators (2) für durchdringende Strahlung ausgerichtet und auf einem mehrgelenkigen Arm (5) befestigt ist, der unter dem geprüften Gefäß positioniert ist, über die das geprüfte Gefäß gezogen wird;
**d. aus einem zweiten Scannerrahmen,** der verwendet wird, um ein Röntgenbild des geprüften Gefäßes durch eine im Wesentlichen horizontale Projektion, gesehen von der Seite, zu erhalten, bestehend:
**i.** aus einer gelenkigen Detektionsanordnung (9), die auf einem Arm (10) angeordnet ist, Detektionsanordnung, in deren Querschnitt eine Matrix von Detektoren (25) angebracht ist, und die bei dem Scanvorgang eine im Wesentlichen vertikale Position in einem variablen Winkel neben dem gescannten Gefäß aufweist;
**ii.** aus einem zweiten Generator (7) für durchdringende Strahlung, der neben dem geprüften Gefäß auf der gegenüberliegenden Seite der gelenkigen Detektionsanordnung (9) angeordnet ist, sodass sein Strahlungsstrahl auf eine gelenkige Detektionsanordnung (9) gerichtet ist, die der Strahlung der Matrix von Detektoren (25) ausgesetzt ist, die mit dem Strahlungsstrahl ausgerichtet ist;
**e. aus einem Teilsystem** (23) **zur Erfassung, Verarbeitung und Anzeige der** von den Strahlungsdetektoren gelieferten Daten und zur Steuerung des Verfahrens des Scanners, **dadurch gekennzeichnet, dass** das Gefäßtraktions-Teilsystem **T** das von den zwei Scannerrahmen geprüfte Gefäß zieht, wobei die Bewegung mit dem Start der Generatoren (2 und 7) für durchdringende Strahlung und der Erfassung von Daten der Detektormatrizen (24 und 25) synchronisiert ist, um mindestens zwei Röntgenbilder des Gefäßes aus verschiedenen Perspektiven zu erhalten.
**f. aus einem Stabilisierungs-Teilsystem** (15) **des Gefäßes** für die zwei Scannerzentren, die das Gefäß ausreichend teilweise aus dem schwimmenden Gleichgewicht entfernen, um die Nickbewegungen zu beseitigen, die durch die Wellen verursacht werden, die in der Scannerzone vorhanden sein können.

2. System zur nicht-intrusiven Prüfung von Gefäßen nach Anspruch **1**, wobei der mehrgelenkige Tragarm (3) die Änderung der Position des Generators (2) sowohl vertikal als auch horizontal vorsieht, sodass er mit der mehrgelenkigen Detektionsanordnung (4) einen ersten Scannerrahmen bildet, um ein Röntgenbild des geprüften Gefäßes durch eine im Wesentlichen vertikale Projektion zu erhalten.

3. System zur nicht-intrusiven Prüfung von Gefäßen nach Anspruch **1**, wobei der mehrgelenkige Arm (5) die Änderung der Position der mehrgelenkigen Detektionsanordnung (4) sowohl vertikal als auch horizontal vorsieht, sodass sie mit dem Generator (2) für durchdringende Strahlung einen ersten Scannerrahmen bildet, um ein Röntgenbild vom Gefäß zu erhalten, das durch eine im Wesentlichen vertikale Projektion geprüft wurde.

4. System zur nicht-intrusiven Prüfung von Gefäßen nach Anspruch **1**, wobei die mehrgelenkige Detektionsanordnung (4) aus mindestens sechs Segmenten besteht, die durch Gelenke mit einem Freiheitsgrad verbunden sind, wodurch eine Drehbewegung ermöglicht wird, die durch ein Betätigungssystem (6) realisiert wird, sodass es der mehrgelenkigen Detektionsanordnung (4) ermöglicht, dynamisch die Form des Längsprofils und des Querschnittsprofils des untergetauchten Körpers des Gefäßes anzunehmen, das geprüft werden soll.

5. System zur nicht-intrusiven Prüfung von Gefäßen nach Anspruch **1**, wobei der Träger (8) die Änderung der Position des Generators (7) für durchdringende Strahlung sowohl vertikal als auch horizontal vorsieht, sodass er mit der gelenkigen Detektionsanordnung (9) einen zweiten Scannerrahmen bildet, der verwendet wird, um ein Röntgenbild des geprüften Gefäßes durch eine im Wesentlichen horizontale Projektion zu erhalten.

6. System zur nicht-intrusiven Prüfung von Gefäßen nach Anspruch **1**, wobei der Arm (10) die Änderung der Position der gelenkigen Detektionsanordnung (9) sowohl vertikal als auch horizontal vorsieht, sodass sie mit dem Generator (7) für durchdringende Strahlung einen zweiten Scannerrahmen bildet, der verwendet wird, um ein Röntgenbild des geprüften Gefäßes zu erhalten, das durch eine im Wesentlichen horizontale Projektion geprüft wird.

7. System zur nicht-intrusiven Prüfung von Gefäßen nach Anspruch **1**, wobei die schwenkbare Detektionsanordnung (9) aus zwei Segmenten besteht, die durch ein Gelenk mit einem Freiheitsgrad verbunden sind, wodurch eine Drehbewegung des unteren Segments ermöglicht wird, sodass es den Abstand zwischen der Matrix von Detektoren (25) und dem Kiel des Gefäßes verringert, das geprüft werden wird.

## Claims

1. **A system for the non-intrusive inspection of vessels** consisting of:
**a. a mechanical support structure** (1) **of the console type,** located on a dock, on which structure the scanner frames are installed;
**b. a control centre** (21) to be positioned outside the scanner dock;
**c. a first scanner frame** used to obtain an x-ray image of the inspected vessel by a substantially vertical projection, viewed from above, consisting of:
**i.** a multi-articulated support arm (3), composed of a plurality of segments, having mounted, at the free end, a first penetrating radiation generator (2); the arm is positioned above the area by which the inspected vessels are towed, so that the radiation beam emitted by the penetrating radiation generator (2) is directed towards the water, in a substantially vertical plane;
**ii.** a multi-articulated detection assembly (4), mounted below the water level, provided with an array of detectors (24), aligned with the beam of the penetrating radiation generator (2) and fixed on a multi-articulated arm (5) positioned under the inspected vessel, on which the inspected vessel is towed;
**d. a second scanner frame** used to obtain an x-ray image of the inspected vessel, by a substantially horizontal projection, in side view, consisting of:
**i.** an articulated detection assembly (9), located on an arm (10), in the section of which detection assembly is mounted an array of detectors (25) and which in the scanning process has a substantially vertical position, with a variable angle, next to the scanned vessel;
**ii.** a second penetrating radiation generator (7), placed next to the inspected vessel, on the opposite side of the articulated detection assembly (9), so that its radiation beam is directed towards an articulated detection assembly (9) and exposes, to the radiation, the array of detectors (25) aligned with the radiation beam;
**e. a subsystem** (23) **for capturing, processing and displaying the data** supplied by the radiation detectors and for controlling the scanning process, **characterized in that** the vessel traction subsystem **T** tows the vessel inspected by the two scanner frames, the movement being synchronized with the start of the penetrating radiation generators (2 and 7) and the acquisition of data from the detector matrices (24 and 25), in order to obtain at least two x-ray images of the vessel, from different perspectives;
**f. a vessel stabilization subsystem** (15) for the two scanner centres, partially removing the vessel from floating balance, sufficient to eliminate the pitching movements caused by the waves that may be present in the scanner area.

2. The non-intrusive vessel inspection system according to claim **1**, wherein the multi-articulated support arm (3) changes the position of the generator (2) both vertically and horizontally, so that it forms, with the multi-articulated detection assembly (4), a first scanner frame to obtain an x-ray image of the inspected vessel by a substantially vertical projection.

3. The non-intrusive vessel inspection system according to claim **1**, wherein the multi-articulated arm (5) changes the position of the multi-articulated detection assembly (4) both vertically and horizontally, so that it forms, with the penetrating radiation generator (2), a first scanner frame to obtain an x-ray image of the inspected vessels by a substantially vertical projection.

4. The non-intrusive vessel inspection system according to claim **1**, wherein the multi-articulated detection assembly (4) consists of at least six segments connected by joints with a degree of freedom, allowing rotational movement realized by an actuation system (6), so that it allows the multi-articulated detection assembly (4) to dynamically take the shape of the longitudinal profile and the sectional profile of the submerged body of the vessel to be inspected.

5. The non-intrusive vessel inspection system according to claim **1**, wherein the support (8) changes the position of the penetrating radiation generator (7) both vertically and horizontally, so that it forms, with the articulated detection assembly (9), a second scanner frame used to obtain an x-ray image of the inspected vessel by a substantially horizontal projection.

6. The non-intrusive vessel inspection system according to claim **1**, wherein the arm (10) changes the position of the articulated detection assembly (9) both vertically and horizontally, so that it forms with the penetrating radiation generator (7) a second scanner frame used to obtain an x-ray image of the inspected vessel by a substantially horizontal projection.

7. The non-intrusive vessel inspection system according to claim **1**, wherein the articulated detection assembly (9) consists of two segments connected by a joint with a degree of freedom, allowing rotational movement of the lower segment so that it decreases the distance between the array of detectors (25) and the keel of the vessel to be inspected.
